# EUROPEAN PATENT SPECIFICATION

(11) **EP 3 156 217 B1**
(45) Date of publication and mention of the grant of the patent: **22.07.2020**
(21) Application number: 15189857.4
(22) Date of filing: 14.10.2015
(51) Int. Cl.: B29C 64/118, B29C 64/209, B29C 64/295, B29C 48/30, B29C 48/92, B33Y 10/00, B33Y 30/00, B29C 48/02, B29C 48/05, B29C 48/86, B29C 48/25, B29C 48/285

(54) **EXTRUDER ASSEMBLY FOR A THREE-DIMENSIONAL PRINTER**
EXTRUDERANORDNUNG FÜR EINEN DREIDIMENSIONALEN DRUCKER
ENSEMBLE EXTRUDEUSE POUR UNE IMPRIMANTE TRIDIMENSIONNELLE

(43) Date of publication of application: 19.04.2017
(73) Proprietor: Y Soft Corporation, a.s., 616 00 Brno - Kralovo Pole (CZ)
(72) Inventor: NADVORNIK, Matej, 56151 Letohrad (CZ); MIKLAS, David, 19000 Praha 9 (CZ); COUFAL, Vladimir, 51754 Vamberk (CZ)
(74) Representative: Hartvichova, Katerina

(56) References cited:
- WO-A1-2015/059603
- US-A1- 2010 327 479
- US-A1- 2014 070 461
- US-A1- 2014 322 383

## Description

### Field of Art

The present invention relates to a extruder assembly (extrusion head) for a three-dimensional printer and to a method of printing using this extruder assembly.

### Background Art

Three-dimensional printers (3D printers) use extruder assemblies for extrusion of thermoplastic materials from which the final printed product is composed. Some three-dimensional printers print using only one type of thermoplastic material at a time, then they usually contain one nozzle, one heating block with one temperature control element for melting the thermoplastic printing material and feeding means for feeding the printing materials to the nozzle. In general, the printing material is fed from a spool, through the heated region of the extruder head. The molten material is forced out of the nozzle and is deposited on the produced product, usually in predefined shapes within a horizontal plane.

However, sometimes a plurality of printing materials are needed for the print, e.g., when a product containing complicated hollow parts is required, then the regions to be hollow in the final product are printed from a soluble printing material, which is later dissolved in a suitable solvent to leave behind solid parts printed from an insoluble printing material.

Currently, dual-nozzle is used for printing from two different materials. For each printing material, a dedicated nozzle, heating block, temperature control element and feeding means are provided. Dual nozzle mechanism is complicated in terms of calibration and entails risk of damage to the layer of material printed by one nozzle by the movement of the other nozzle. Solutions containing one nozzle for printing using a plurality of different materials were proposed.

KR101346704 describes a three-dimensional printer for printing multi-colored products, comprising a plurality of filament transferring tools in a heater nozzle. The figures show three filament transferring tools forming the shape of trident. The filaments are melted on the way to the nozzle, thus increasing the risk of contamination and mixing of the printing materials.

KR 101430582 describes a 3D printer with extruder, comprising multi-feeder feeding a plurality of filaments into rotatable multi-nozzle, the multi-feeder and the nozzle being operated by one motor. This solution is prone to deformation of the filaments, requires filaments having the properties of wires (mainly solidity) and leads to contamination and mixing of printing materials.

### Disclosure of the invention

The present invention provides an extruder assembly for a three-dimensional printer which has a simple construction while allowing to use a single nozzle for printing using a plurality of printing material filaments and preventing undesired contamination of one printing material by other printing materials.

The extruder assembly of the present invention comprises one nozzle, attached to a heating block, a temperature control element for controlling the temperature of the heating block, a mixer, a heat sink, arranged between the heating block and the mixer, and a plurality of feeding means for feeding a plurality of printing material filaments from filament storage means to the mixer and for retracting the printing material filaments from the mixer.

In one preferred embodiment, the feeding means are arranged to feed the filaments into the mixer under the angle of 10 to 60 degrees, preferably 15 to 35 degrees, relative to the longitudinal axis of the nozzle. The feeding angle ensures minimum friction, thereby preventing undesired deformation of the filaments and ensuring smooth functioning of the extruder assembly.

The filament storage means include any means allowing to store the stock of the printing material filament, such as a spool or a reel carrying the filament.

Preferably, the extruder assembly is adapted for printing using two printing material filaments, and comprises two feeding means.

In one embodiment of the invention, the feeding means comprises a leading tube for leading the filament, mounted with tube connector with a locking element, a stepper motor connected to an extruder cog, and downforce means. The tube connector with the locking element ensures correct routing of the filament to the extruder cog. The extruder cogs usually contain a groove with notches to engage with the filament in order to change the rotational movement of the extruder cog to the translational movement of the filament. The leading tube may have beveled edges in order to enable the printing material filament to get as close as possible to the extruder cog and to prevent the filament to get out from its pre-defined trajectory.

In a preferred embodiment, the downforce system comprises a plurality of shoulders engaged with a plurality of bearings and at least one spring for generating pressure to achieve a stable downforce and to prevent slipping of the printing material filaments. In one embodiment, when the extruder assembly contains two feeding means for feeding two printing material filaments, the downforce system comprises two shoulders, each engaged with a bearing, and one spring which applies pressure on both filaments through the shoulders.

The downforce combined with low temperature in this part of the device, due to the heat sink, prevents undesired deformation of the printing material filaments, in particular its roundness.

The axis of the extruder cog is usually arranged perpendicular to the direction of the filaments to be fed into the mixer using the feeding means.

The herein described specific embodiment of the feeding means is particularly suitable for printing with soft printing materials having low melting points, which are extremely prone to deformation. However, it can also be used for printing with hard printing materials.

The mixer comprises a plurality of input leading channels for inserting the printing material filaments and one output leading channel for feeding the printing material filament further to the nozzle. The input leading channels preferably contact the output leading channel in one spot. Each input leading channel preferably contacts the output leading channel under an angle of 10 to 60 degrees, more preferably 15 to 35 degrees. Each input leading channel is arranged for accepting the filament from one feeding device. The mixer is preferably made of a glossy and preferably also wear-resistant material.
This construction of the mixer enables smooth sliding of the filament in both directions which is needed for feeding the filament into the nozzle and for retracting the filament when changing the printing material.
In one embodiment, the mixer is composed of two superimposed plates, wherein each plate is provided with input and output leading grooves. When the plates are superimposed, the superimposed grooves form input and output leading channels.

The heat sink functions as a cooler. It separates the heating block with the nozzle from all the other components of the extruder assembly. The heat sink prevents the transfer of heat from the heating block to the other components (apart from the nozzle). Its presence ensures that only a very small amount of the printing material is melted and therefore less cleaning is needed when one filament is retracted and another filament is fed into the heat block and nozzle. Additionally, clogging of the nozzle is thereby reduced. The filament is led through the heat sink via a tube, preferably made of fluorinated polymers, such as perfluoro polyalkylenes (e.g. polytetrafluoroethylene (PTFE)) or perfluoroethers (PFAs). Fluorinated polymers provide especially good slideability for the filament and are temperature-resistant. The heat sink preferably comprises aluminum fins, stainless-steel tubes and/or Peltier element.

The temperature control element connected with the heating block can adapt to the printing material that is used for printing at the moment, and as only the heating block is heated and it is isolated by the cooler from the other components of the extruder assembly, the thermal change is fast. Additionally, the printing material which is not used for printing at the moment does not have to stand the temperature used for melting of the printing material in use, because it is retracted from the mixer, i.e., far from the heating block, isolated by the cooler.

In a preferred embodiment, the components of the extruder assembly are arranged on a planar aluminum support which serves as a further heat exchanger for cooling the components of the extruder assembly, in particular the motors and electronic controlling components, as well as of the printing material filaments.

The present solution further provides a method of three-dimensional printing using the extruder assembly as described herein, wherein a plurality of printing material filaments are fed into the mixer by a plurality of feeding means, whereas a first filament of the printing material to be used for printing is fed by means of the first feeding means through the mixer and heat sink to the heating block where the first filament material is melted and forced out through the nozzle, and when the filament of the printing material is to be changed, the first printing material filament is retracted by means of the feeding means from the heating block and the mixer, and a second printing material filament is fed into the mixer by means of the second feeding means and through the heat sink to the heating block and forced out of the nozzle.

The printing material filaments to be used in this invention include polyvinyl alcohol, polylactic acid, acrylonitrile butadiene styrene, high impact polystyrene filaments. Polyvinyl alcohol (PVA) is water soluble and may serve as a material for defining the regions to be hollow in the final product. After the printing, PVA can be dissolved in water. Polylactic acid (PLA) and/or acrylonitrile butadiene styrene (ABS) are usually used as build material (structural material). High impact polystyrene (HIPS) is usually used for building support structures (scaffolding) for complex products. After the printing is finished, it can be dissolved in, e.g., limonene.

The single-nozzle arrangement of the present invention solves the problems connected with the two-nozzle embodiments - there is no necessity for sophisticated same-level nozzle calibration in order to avoid damage of the print-out with the second nozzle; furthermore, in comparison with the dual-nozzle arrangement, extra pixels to build volume in x-axis are added in the single-nozzle arrangement.

The separation of the mixer from the heating block by the cooler brings distinct advantages - the amount of the melted material in the nozzle is minimal due to the mixing procedure being performed outside the heating element. This decreases the printing material consumption for cleaning procedure, saves time required to change filament and decreases the risk of clogging of the nozzle.

In particular, when PVA is used as one of the printing materials, there is a risk of damage or spoiling of the material due to thermal damage when using the systems known in the art. However, the present invention provides a system where the time during which the printing material is maintained at higher temperatures is short, and the printing material which is not in use for printing at the moment is not affected by the temperature needed for melting the printing material in use.

The present system reliably prevents mixing and contamination of the printing materials by each other, without requiring complex system and complex system components. This is important for many combinations of printing materials, for example, if PVA is contaminated with another printing material, its solubility in water can decrease. On the other hand, if a build material becomes contaminated by a soluble material, the print-outs may be prone to damage by air moisture.

The present invention further encompasses use of the extruder assembly of the present invention in a three-dimensional printer, and a three-dimensional printer comprising the extruder assembly of the present invention.

The present invention is further illustrated by examples which should however not be construed as limiting.

### Brief description of drawings

Figure 1 is a schematic representation of the extruder assembly described herein below as an example of carrying out the invention.
Figure 2 is a schematic representation of the plates forming a mixer.

### Example of carrying out the Invention

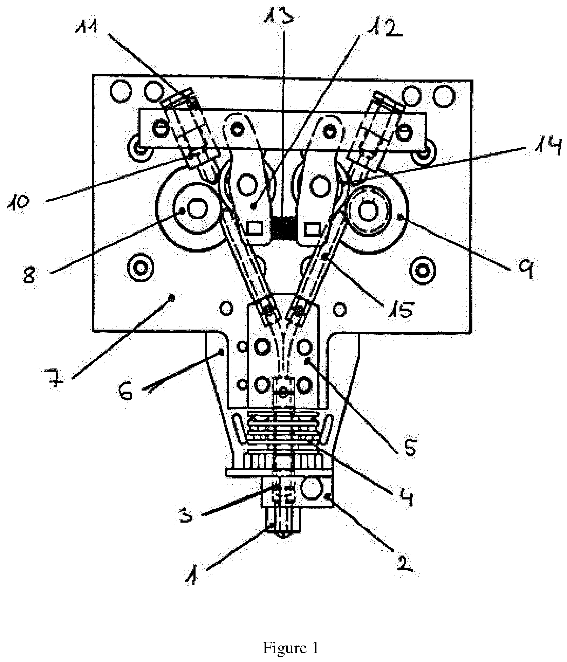

An example of a extruder assembly of the present invention is described herein with reference to Figure 1.

The extruder assembly comprises a nozzle 1, a heating block 2 through which a polytetrafluoroethylene tube 3 leads to the nozzle 1, a heat sink 4 separating the heating block 2 from the other components of the extruder assembly, a mixer 5, and two feeding means. Each feeding means contains a dosing motor 9, an extruder cog 8, a leading tube 15, a tube connector 11 with locking element and a tube connector extension 10. The downforce is ensured by bearing 14, pressure shoulders 12 and downforce spring 13 pressing on both pressure shoulders 12.

The heating block 2 is arranged on a heating block holder 6 and the remaining components of the extruder assembly are arranged on an aluminum planar support 7.

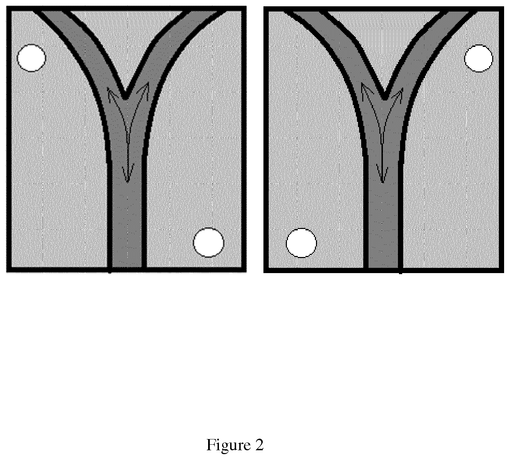

As shown in Figure 2, the mixer is composed of two superimposed plates, wherein each plate is provided with two input (shown in the upper part) and one output (in the bottom part of the figure) leading grooves. When the plates are superimposed, the superimposed grooves form input leading channels for the printing material filaments and output leading channels for the printing material filament which is further fed to the nozzle. The mixer is preferably made of a glossy and wear-resistant material.

## Claims

1. An extruder assembly for a three-dimensional printer comprising one nozzle (1), attached to a heating block (2), a temperature control element for controlling the temperature of the heating block (2), a mixer (5), and a plurality of feeding means for feeding a plurality of printing material filaments from filament storage means to the mixer (2) and for retracting the printing material filaments from the mixer (5), **characterized in that** it further comprises a heat sink (4) arranged between the heating block (2) and the mixer (5).

2. The extruder assembly according to claim 1, wherein the extruder assembly is adapted for printing using two printing material filaments, and comprises two feeding means.

3. The extruder assembly according to any one of the preceding claims, wherein the feeding means comprise a leading tube (15) for leading the filament, mounted with tube connector (11) with a locking element, a stepper motor (9) connected to an extruder cog (8), and downforce means.

4. The extruder assembly according to claim 3, wherein the downforce system comprises a plurality of shoulders (12) engaged with a plurality of bearings (14) and at least one spring (13) for generating pressure to achieve a stable downforce and to prevent slipping of the printing material filaments.

5. The extruder assembly according to any one of the preceding claims, wherein the mixer (5) comprises a plurality of input leading channels for inserting the printing material filaments and one output leading channel for feeding the printing material filament further to the nozzle, wherein each input leading channel contacts the output leading channel, and wherein each input leading channel is arranged for accepting the filament from one feeding device.

6. The extruder assembly according to any one of the preceding claims, wherein the heat sink (4) comprises a tube for leading the printing material filament, and cooling means such as aluminum fins, stainless-steel tubes and/or Peltier element.

7. The extruder assembly according to any one of the preceding claims, wherein the components of the extruder assembly are arranged on a planar aluminum support (7).

8. A method of three-dimensional printing using the extruder assembly according to any one of the preceding claims, wherein a plurality of printing material filaments are fed into the mixer (5) by a plurality of feeding means, whereas a first filament of the printing material to be used for printing is fed by means of the first feeding means through the mixer (5) to the heating block (2) where the first filament material is melted and forced out through the nozzle (1), and when the filament of the printing material is to be changed, the first printing material filament is retracted by means of the feeding means from the heating block (2) and the mixer (5), and a second printing material filament is fed into the mixer (5) by means of the second feeding means and to the heating block (2) and forced out of the nozzle (1), **characterized in that** each filament material is fed from the mixer (5) to the heating block (2) through a heat sink (4).

9. The method of claim 8, wherein the printing material filaments include polyvinyl alcohol, polylactic acid, acrylonitrile butadiene styrene, high impact polystyrene filaments.

10. Use of the extruder assembly according to any one of claims 1 to 7 in a three-dimensional printer.

11. A three-dimensional printer comprising the extruder assembly according to any one of claims 1 to 7.

## Patentansprüche

1. Extruderanordnung für einen dreidimensionalen Drucker, umfassend eine Düse (1), die an einem Heizblock (2) angebracht ist, ein Temperatursteuerelement zum Steuern der Temperatur des Heizblocks (2), einen Mischer (5), und mehrere Zuführmittel zum Zuführen mehrerer Druckmaterialfilamente von Filamentspeichermitteln zum Mischer (2) und zum Zurückziehen der Druckmaterialfilamente von dem Mischer (5), **gekennzeichnet dadurch, dass** sie ferner einen Kühlkörper (4) umfassen, der zwischen dem Heizblock (2) und dem Mischer (5) angeordnet ist.

2. Extruderanordnung nach Anspruch 1, wobei die Extruderanordnung zum Drucken unter Verwendung von zwei Druckmaterialfilamenten angepasst ist und zwei Zuführmittel umfasst.

3. Extruderanordnung nach einem der vorhergehenden Ansprüche, wobei die Zuführeinrichtung ein Führungsrohr (15) zum Führen des Filaments umfasst, das mit einem Rohrverbinder (11) mit einem Verriegelungselement montiert ist, ein Schrittmotor (9) verbunden mit einem Extruderzahnrad (8) und Abtriebsmittel.

4. Extruderanordnung nach Anspruch 3, wobei die Abtriebsmittel mehrere Schultern (12) umfassen, die mit mehreren Lagern (14) und mindestens einer Feder (13) in Eingriff stehen, um Druck zu erzeugen, um einen stabilen Abtrieb zu erreichen und zu verhindern Verrutschen der Druckmaterialfilamente.

5. Extruderanordnung nach einem der vorhergehenden Ansprüche, wobei der Mischer (5) mehrere Eingangsführungskanäle zum Einsetzen der Druckmaterialfilamente und einen Ausgangsleitkanal zum Zuführen des Druckmaterialfilaments weiter zur Düse umfasst, wobei jeder Eingangsführungskanal kontaktiert den Ausgangsleitkanal, wobei jeder Eingangsführungskanal zum Aufnehmen des Filaments von einer Zuführvorrichtung angeordnet ist.

6. Extruderanordnung nach einem der vorhergehenden Ansprüche, wobei der Kühlkörper (4) ein Rohr zum Führen des Druckmaterialfilaments und Kühlmittel, wie Aluminiumrippen, Edelstahlrohre und/oder Peltier-Element, umfasst.

7. Extruderanordnung nach einem der vorhergehenden Ansprüche, wobei die Komponenten der Extruderanordnung auf einem planaren Aluminiumträger (7) angeordnet sind.

8. Verfahren zum dreidimensionalen Drucken unter Verwendung der Extruderanordnung nach einem der vorhergehenden Ansprüche, wobei mehrere Druckmaterialfilamente durch mehrere Zuführmittel in den Mischer (5) einführt werden, wobei ein erstes Filament der zum Drucken zu verwendende Druckmaterial wird mittels des ersten Zuführmittels durch den Mischer (5) dem Heizblock (2) zugeführt, wo das erste Filamentmaterial geschmolzen und durch die Düse (1) herausgedrückt wird, und wenn das Filament des Druckmaterials soll gewechselt werden, das erste Druckmaterialfilament wird mittels Zuführmitteln von dem Heizblock (2) und dem Mischer (5) zurückgezogen, und ein zweites Druckmaterialfilament wird in den Mischer (5) einführt, mittels zweiten Zuführmitteln und des Heizblocks (2) und aus der Düse (1) herausgedrückt, **dadurch gekennzeichnet, dass** jedes Filamentmaterial vom Mischer (5) über einen Kühlkörper (4) dem Heizblock (2) zugeführt wird.

9. Verfahren nach Anspruch 8, wobei die Druckmaterialfilamente Polyvinylalkohol-, Polymilchsäure-, Acrylnitrilbutadienstyrol-, hochschlagfeste Polystyrol-filamente umfassen.

10. Verwendung der Extruderanordnung gemäß einem der Ansprüche 1 bis 7 in einem dreidimensionalen Drucker.

11. Dreidimensionaler Drucker, umfassend die Extruderanordnung nach einem der Ansprüche 1 bis 7.

## Revendications

1. Ensemble extrudeuse pour une imprimante tridimensionnelle comprenant une buse (1), fixée à un bloc chauffant (2), un élément de contrôle de la température pour contrôler la température du bloc chauffant (2), un mélangeur (5), et une pluralité de moyens d'avancement pour faire avancer une pluralité de filaments de matériau d'impression à partir du moyen de stockage de filaments vers le mélangeur (2) et pour rétracter les filaments de matériau d'impression du mélangeur (5), **caractérisé en ce qu'**il comprend un dissipateur thermique (4) disposé entre le bloc chauffant (2) et le mélangeur (5).

2. Ensemble extrudeuse selon la revendication 1, où l'ensemble extrudeuse est adapté pour l'impression en utilisant deux filaments de matériau d'impression, et comprend deux moyens d'avancement.

3. Ensemble extrudeuse selon l'une quelconque des revendications précédentes, dans lequel les moyens d'avancement comprennent un tube de tête (15) pour conduire le filament, monté avec un connecteur de tube (11) avec un élément de verrouillage, un moteur pas à pas (9) connecté à un pignon d'extrudeuse (8), et des moyens d'appui.

4. Ensemble extrudeuse selon la revendication 3, dans lequel les moyens d'appui comprennent une pluralité d'épaulements (12) engagés avec une pluralité de roulements (14) et au moins un ressort (13) pour générer une pression pour obtenir une force d'appui stable et pour empêcher glissement des filaments du matériau d'impression.

5. Ensemble extrudeuse selon l'une quelconque des revendications précédentes, dans lequel le mélangeur (5) comprend une pluralité de canaux d'entrée pour insérer les filaments de matériau d'impression et un canal de sortie pour avancer le filament de matériau d'impression vers la buse, où chaque canal d'entrée est en contact avec le canal de sortie, et où chaque canal d'entrée est agencé pour accepter le filament provenant d'un dispositif d'avancement.

6. Ensemble extrudeuse selon l'une quelconque des revendications précédentes, dans lequel le dissipateur thermique (4) comprend un tube pour conduire le filament de matériau d'impression, et des moyens de refroidissement tels que des ailettes en aluminium, des tubes en acier inoxydable et/ou un élément Peltier.

7. Ensemble extrudeuse selon l'une quelconque des revendications précédentes, où les composants de l'ensemble d'extrudeuse sont disposés sur un support plan en aluminium (7).

8. Procédé d'impression tridimensionnelle utilisant l'ensemble extrudeuse selon l'une quelconque des revendications précédentes, dans lequel une pluralité de filaments de matériau d'impression sont introduits dans le mélangeur (5) par une pluralité de moyens d'avancement, où un premier filament du matériau d'impression à utiliser pour l'impression est avancé par le premier moyen d'avancement à travers le mélangeur (5) jusqu'au bloc chauffant (2) où le premier matériau de filament est fondu et forcé hors de la buse (1), et lorsque le filament du matériau d'impression doit être changé, le premier filament de matériau d'impression est rétracté par le moyen d'avancement du bloc chauffant (2) et du mélangeur (5), et un second filament de matériau d'impression est introduit dans le mélangeur (5) par le deuxième moyen d'avancement et vers le bloc chauffant (2) et forcé hors de la buse (1), **caractérisé en ce que** chaque matériau de filament est avancé du mélangeur (5) au bloc chauffant (2) à travers un dissipateur thermique (4).

9. Procédé selon la revendication 8, dans lequel les filaments de matériau d'impression comprennent de l'alcool polyvinylique, de l'acide polylactique, de l'acrylonitrile butadiène styrène, des filaments de polystyrène résistant aux chocs.

10. Utilisation de l'ensemble extrudeuse selon l'une quelconque des revendications 1 à 7 dans une imprimante tridimensionnelle.

11. Imprimante tridimensionnelle comprenant l'ensemble extrudeuse selon l'une quelconque des revendications 1 à 7.
